# EUROPÄISCHE PATENTSCHRIFT

(11) **EP 0 568 794 B1**
(45) Veröffentlichungstag und Bekanntmachung des Hinweises auf die Patenterteilung: **09.01.2002**
(21) Anmeldenummer: 93103832.7
(22) Anmeldetag: 10.03.1993
(51) Int. Cl.: H04Q 11/00

(54) **Mehrstufige Vermittlungseinrichtung für optische Signale**
Multistage switch for optical signals
Commutateur à plusieurs étages pour des signaux optiques

(30) Priorität: 26.03.1992 DE 4209790
(43) Veröffentlichungstag der Anmeldung: 10.11.1993
(73) Patentinhaber: ALCATEL, 75008 Paris (FR)
(72) Erfinder: Eilenberger, Gert Dr., W-7312 Kirchheim/T. (DE); Böttle, Dietrich, W-8335 Salach (DE)
(74) Vertreter: Brose, Gerhard, Dipl.-Ing.

(56) Entgegenhaltungen:
- EP-A- 0 310 058
- EP-A- 0 347 903
- EP-A- 0 463 634
- CONFERENCE RECORD, IEEE GLOBAL TELECOMMUNICATINS CONFERENCE, 2-5 DEZ. 1991, HEFT 2 SEITEN 1075-1081, PHOENIX US, XP332833 K.Y. ENG ET AL 'Gigabit-Per-Second ATM Packet Switching with the Growable Switch Architecture'
- PATENT ABSTRACTS OF JAPAN vol. 10, no. 275 (E-438) (2331) 18. September 1986 & JP-A-61 096 893 (FUJITSU) 15. Mai 1986
- IEEE CIRCUITS AND DEVICES MAGAZINE, Bd.5, Nr.4, Juli 1989, NEW YORK US Seiten 39 - 43, XP33510 H.S. HINTON 'Photonic Time-Division Switching Systems'
- CONFERENCE RECORD, IEEE GLOBAL TELECOMMUNICATIONS CONFERENCE, 28 NOV.-1 DEZ. 1988, HEFT 2 SEITEN 933-937, HOLLYWOOD US, XP40531 S. SUZUKI ET AL 'Photonic Wavelength Division and Time Division Hybrid Switching Networks for Large Line-Capacity Broadband Switching Systems'
- PATENT ABSTRACTS OF JAPAN vol. 12, no. 268 (E-638) (3115) 27. Juli 1988 & JP-A-63 050 194 (FUJITSU LTD) 3. März 1988
- "Input Versus Output Queueing on a Space-Division Packet Swicth", Mark. J. Carol et al., IEEE Transactions on Communications, COM-35, No. 12, Dezember 1987.

## Beschreibung

Die Erfindung betrifft eine mehrstufige Vermittlungseinrichtung für optische Signale.

Eines der Probleme bei der optischen Vermittlungstechnik ist die Zwischenspeicherung von Signalen. Zur Vermittlung von im Zeitmultiplex zusammengefaßten Signalen müssen bei der Vermittlung beinahe immer die Zeitlagen gewechselt und damit die Signale zwischengespeichert werden. Bei Paketvermittlungseinrichtungen, die im Hinblick auf zukünftige ATM-Systeme (ATM = Asynchronous Transfer Mode) derzeit von besonderem Interesse sind, muß immer dann zwischengespeichert werden, wenn zwei Pakete, bei ATM Zellen genannt, gleichzeitig zur Weitergabe in einem bestimmten Kanal bereitstehen. Wegen des statistischen Verkehrsaufkommens kann nicht ausgeschlossen werden, daß zwei Pakete gleichzeitig auf dem gleichen Weg weitergegeben werden sollten.

Aus J.S. Turner, "Design of a Broadcast Packet Network", veröffentlicht in "Proceedings of INFOCOM '86", April 1986, Seiten 667 bis 675 ist es bereits bekannt, innerhalb eines ATM-Koppelnetzes jeweils mehrere Leitungen zu einer Gruppe zusammenzufassen. Die Leitungen einer Gruppe laufen jeweils parallel und sind untereinander völlig gleichwertig. Außer der Tatsache, daß hier die Kapazität erhöht wird, ist dabei von Bedeutung, daß die statistischen Verkehrsschwankungen ausgeglichen werden, was die Zahl der notwendigen Zwischenspeicher erniedrigt.

Aus der DE 37 42 941 C2 (entspricht US 4,922,487, internes Aktenzeichen G. Eilenberger 1-3-1) ist eine ATM-Vermittlungsstelle bekannt, bei der jeweils eine feste Zahl zu vermittelnder Zellen oder Pakete zu einem Rahmen zusammengefaßt, sämtliche Pakete in untereinander gleich lange Paketteile zerlegt und auf Unterrahmen aufgeteilt werden. Vermittelt wird auf der Basis von Unterrahmen im synchronen Zeitmuliplex. Ausgenützt wird dabei die Tatsache, daß alle Zeitkanäle auf einer Leitung untereinander gleichwertige Abnehmerkanäle darstellen, womit statistische Schwankungen weitgehend ausgeglichen werden. Als Speicher wirken die bei synchroner Zeitmultiplexvermittlung ohnehin erforderlichen Speicher. Der Speicherplatzbedarf im Koppelfeld wird im Verhältnis Rahmen : Unterrahmen verringert.

Aus D.W. Smith et al, "Multidimensional Optical Switching Networks", IEEE 1989, ist bekannt, zum Zwecke der Kapazitätserhöhung einer optischen Vermittlungsstelle die bekannten Multiplexmethoden, bei denen zum Zeit- und Raummultiplex in der optischen Vermittlungstechnik auch der Wellenlängen- oder Frequenzmultiplex gehört, miteinander zu kombinieren. Die Hinzunahme des Wellenlängen- oder Frequenzmultiplex als weiterer Dimension erhöht nicht nur, wie dort gewünscht, die Kapazität der Anlage, sondern erhöht im selben Maße auch die Anzahl der jeweils untereinander gleichwertigen Abnehmerkanäle. Der Gesamtkapazität dieser Vermittlungsstelle sind aber doch recht enge Grenzen gesetzt.

Bei ausreichender Anzahl untereinander gleichwertiger Abnehmerkanäle werden die auftretenden statistischen Schwankungen soweit ausgeglichen, daß auf Zwischenspeicher, mit Ausnahme der für die Umsetzung der Zeitlagen beim Zeitmultiplex erforderlichen, verzichtet werden kann.

Das Umsetzen der Zeitlage eines optischen Signals ist mit großem Aufwand verbunden. Eine grundsätzliche Möglichkeit zur Realisierung liegt darin, das optische Signal in ein elektrisches umzuwandeln, dieses zwischenzuspeichern und zum gewünschten Zeitpunkt wieder in ein optisches Signal umzuwandeln. Bistabile optische Elemente scheiden zumindest derzeit zum Zwischenspeichern ganzer ATM-Zellen oder ganzer Rahmen beim synchronen Multiplex aus. Die einzige derzeit überhaupt einsetzbare Möglichkeit, optische Signale direkt im optischen Bereich zwischenzuspeichern, liegt in der Verwendung von Laufzeitgliedern, die durch Lichtleitfasern realisiert werden. Unter Berücksichtigung der Länge der zwischenzuspeichernden Signale und der Zeit, während derer die Signale zwischenzuspeichern sind, sind dabei Längen von Lichtleitfasern in der Größenordnung von 30 m bis 25 km erforderlich.

Andererseits kann ein zeitliches Umsetzen eines optischen Signals nicht grundsätzlich vermieden werden. Einerseits ist jede Synchronisation, die in der vorliegenden Erfindung nicht betrachtet wird, mit einem zeitlichen Umsetzen verbunden. Andererseits ist bei synchroner Multiplextechnik das Umsetzen in eine ganz bestimmte Zeitlage gerade eines der Ziele des Vermittlungsvorgangs, während bei ATM das Vermeiden der zeitlichen Kollision zweier ATM-Zellen eines der obersten Ziele des Vermittlungsvorgangs ist.

Auch in der EP-A-0 310 058 wird schon die Forderung erhoben, die Anzahl der aufwendigen Zeitlagenumsetzer zu reduzieren. Indem dort in einer Stufe die Zeitlagenumsetzer durch Frequenzlagenumsetzer ersetzt werden, wird dort etwa die Hälfte der erforderlichen Zeitlagenumsetzer eingespart. Dabei ist wohl auch berücksichtigt, daß in der Regel in der Mitte eines Koppelnetzes mehr parallele Verbindungswege vorhanden sind als an dessen Ein- und Ausgängen.

Aus CONFERENCE RECORD, IEEE GLOBAL TELECOMMUNICATIONS CONFERENCE, 2-5 DEZ. 1991, HEFT 2, SEITEN 1075-1081, PHOENIX US, K.Y.ENG ET AL. 'Gigabit-Per-Second ATM Packet Switching with the Growable Switch Architecture' ist auch schon bekannt, daß die zwingend erforderlichen Zwischenspeicher mit der besten Wirkung am Ausgang eingesetzt werden. Diese Untersuchung betrifft eine letztlich nur mit räumlicher Vermittlung auf dem bekannten "Knockout-Prinzip" basierende Anordnung, die eingangs- und ausgangsseitig noch mit Wellenlängen- und Zeitlagenumsetzern zur Anpassung an die Umgebung ausgestattet ist.

Der Erfindung liegt die Aufgabe zugrunde, eine mehrstufige Vermittlungseinrichtung für optische Signale anzugeben, bei der der Aufwand für die Zeitlagenumsetzungen gering ist.

Die Aufgabe wird gelöst durch eine mehrstufige Vermittlungseinrichtung nach der Lehre des Hauptanspruchs.

Der Grundgedanke der Erfindung liegt darin, Zeitlagenumsetzungen nur in der letzten Stufe vorzunehmen, in den vorangegangenen Stufen dagegen ausschließlich mit Raumlagen- und Frequenzlagenumsetzungen zu arbeiten.

Bevorzugt wird eine Lösung, bei der alle Stufen der Vermittlungseinrichtung sowohl Raumlagen- als auch Frequenzlagenumsetzer aufweisen, die letzte Stufe zusätzlich noch Zeitlagenumsetzer.

Die Erfindung nutzt die schon oben erwähnte Tatsache, daß zwischen den einzelnen Stufen einer mehrstufigen Vermittlungseinrichtung immer mehrere oder gar viele untereinander gleichwertige Kanäle vorhanden sind. Durch geeignete Dimensionierung der Vermittlungseinrichtung kann sichergestellt werden, daß zwischen den Stufen zu jedem Zeitpunkt einer dieser untereinander gleichwertigen Kanäle erreicht werden kann. Erst am Ausgang der Vermittlungseinrichtung kann dies nicht mehr durch interne Dimensionierung erreicht werden; dort muß deshalb die Möglichkeit der zeitlichen Zwischenspeicherung gegeben sein.

Die Erfindung besteht im Grunde genommen darin, bei den derzeit bekannten Konzepten für mehrdimensionale mehrstufige optische Vermittlungseinrichtungen die Zeitlagenumsetzer außer in der letzten Stufe wegzulassen. Die fehlende Möglichkeit der Zeitlagenumsetzung in den ersten Stufen muß durch eine Erhöhung der zur Verfügung stehenden Frequenzlagen oder Raumlagen ausgeglichen werden.

Dieser Ausgleich kann beispielsweise erreicht sein, wenn zwischen den Stufen der Vermittlungseinrichtung soviele Wellenlängen (Frequenzlagen) und soviele Leitungen (Raumlagen) verwendet werden, daß dort das Produkt aus der Zahl der Frequenzlagen und der Zahl der Raumlagen etwa doppelt so groß ist wie das entsprechende Produkt vor der ersten und nach der letzten Stufe.

Eine erfindungsgemäß aufgebaute Vermittlungseinrichtung eignet sich besonders gut für eine an sich bekannte Betriebsweise, bei der der auftretende Verkehr bis zur mittleren Stufe hin statistisch gestreut und von der mittleren Stufe aus gezielt zum gewünschten Ausgangskanal vermittelt wird. Wird diese statistische Streuung bei ATM nicht auf die einzelnen Verbindungen, sondern auf die einzelnen Zellen angewandt, so werden damit selbst kurzfristige lokale Überlastungen vermieden. Da bei der erfindungsgemäß aufgebauten Vermittlungseinrichtung innerhalb der Vermittlungseinrichtung keine Zeitlagenumsetzungen erfolgen, sind die Durchlaufzeiten auf allen Wegen gleich; ein gegenseitiges Überholen von zur selben Verbindung gehörenden Zellen ist damit ausgeschlossen. Eine bei der genannten Betriebsweise üblicherweise erforderliche ausgangsseitige Einrichtung zur Wiederherstellung der ursprünglichen Reihenfolge zusammengehöriger Zellen ist hier nicht notwendig. Damit ergibt sich eine weitere, ganz enorme Reduzierung an Speicherbedarf.

Im folgenden wird die Erfindung anhand eines Ausführungsbeispiels unter Zuhilfenahme der beiliegenden Zeichnungen weiter erläutert.
- Fig. 1: zeigt eine modular aufgebaute, erfindungsgemäß ausgebildete Vermittlungseinrichtung.
- Fig. 2: zeigt beispielhaft den Aufbau eines Moduls mit Raumlagen- und Frequenzlagenumsetzung.
- Fig. 3: zeigt den Aufbau eines Moduls mit Raumlagenumsetzung und Untermodulen mit Zeitlagen- und Frequenzlagenumsetzung.
- Fig. 4: zeigt den Aufbau eines Untermoduls nach Fig. 3.

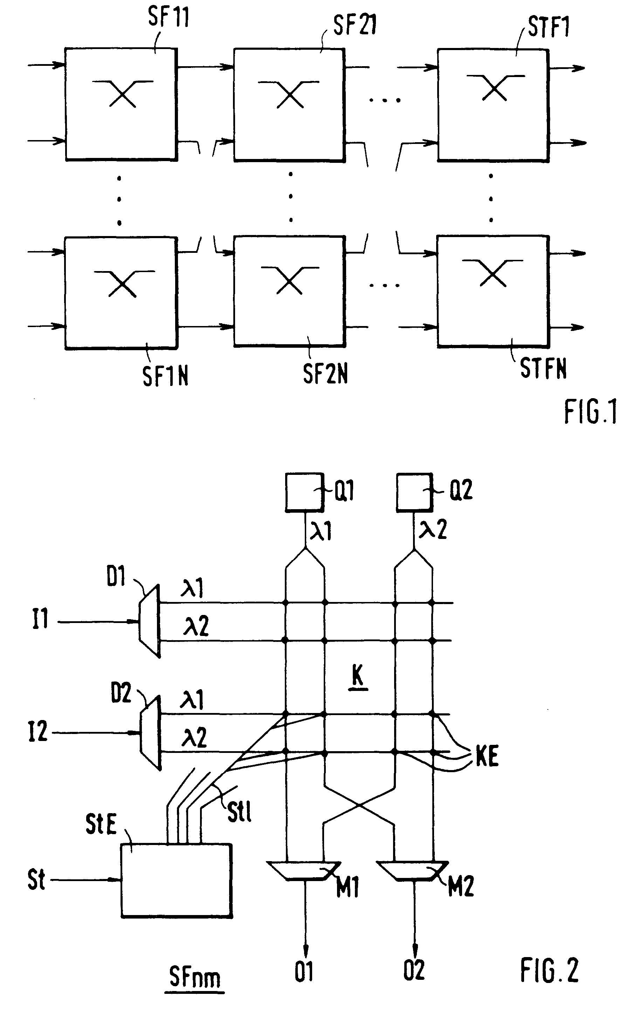

Die Vermittlungseinrichtung nach Fig. 1 besteht in an sich bekannter Weise aus einer Anzahl hintereinandergeschalteter Vermittlungsstufen, die jeweils eine Anzahl von gleichartigen Modulen aufweisen. Die Anzahl der Module in jeder Stufe ergibt sich in ebenfalls an sich bekannter Weise aus der Anzahl der Ein- und Ausgänge der Vermittlungsstelle, der Anzahl der Ein- und Ausgänge eines Moduls und dem zu vermittelnden Verkehrsaufkommen. Die Anzahl der Stufen und die Verbindung der Stufen untereinander ergibt sich ebenfalls in an sich bekannter Weise. Bevorzugt wird ein Aufbau mit ungerader Anzahl von Stufen, in dem von jedem Modul der ersten Stufe zu jedem Modul der mittleren Stufe und von jedem Modul der mittleren Stufe zu jedem Modul der letzten Stufe genau ein Weg führt. Jeder solche Weg kann und muß auch in gewissem Umfang eine Anzahl untereinander gleichwertiger Kanäle führen. Die Kanäle können sich durch die Raumlage (optische Leitung), die Frequenzlage (Wellenlänge) und die Zeitlage unterscheiden.

Erfindungsgemäß sind nun alle Module, bis auf die Module der letzten Stufe, als Raum- und Frequenzlagenumsetzermodule, SF11, ..., SF1N, SF21, ..., SF2N, ..., aufgebaut. Die Module der letzten Stufe sind als Raum-, Zeit- und Frequenzlagenumsetzermodule, STF1, ,..., STFN, aufgebaut. Daß die Module der ersten Stufe noch weitere Aufgaben übernehmen oder daß der ersten Stufe für solche weiteren Aufgaben noch eine Vorstufe vorgeschaltet ist, sei hier nur am Rande erwähnt. Eine solche Aufgabe kann z.B. darin liegen, die mittlere Verkehrsmenge pro Kanal zu halbieren, indem die Zahl der Kanäle verdoppelt wird, beispielsweise durch Verdopplung der zur Verfügung gestellten Frequenzen oder Betriebswellenlängen.

Sowohl reine Raum- und Frequenzlagenumsetzermodule als auch kombinierte Raum-, Zeit und Frequenzlagenumsetzermodule sind dem Fachmann an sich geläufig. Nur beispielhaft wird deshalb im folgenden jeweils ein solches Modul beschrieben. Im Hinblick auf die modernere Realisierung dieser Module wird auf die ihrer Form wegen als Y-Laser bezeichneten Bauelemente verwiesen, die nicht nur als Lichtquelle, sondern auch als optische Verstärker, optische Schalter oder Wellenlängenumsetzer verwendbar sind. Sie sind u.a. beschrieben von M. Schilling et al. als "Integrated Interferometric Injection Laser: Novel Fast and Broad-Band Tunable Monolithic Light Source", IEEE Journal of Quantum Electronics, Vol. 27, No. 6, June 1991, pp. 1616-1622.

Grundsätzlich können unter Zuhilfenahme elektrooptischer und optoelektrischer Umsetzer sämtliche Funktionen statt im optischen auch im elektrischen Bereich durchgeführt werden. Die verschiedenen Frequenzen sind dann durch weitere Raumlagen zu ersetzen und bei der Umsetzung aus dem oder in den optischen Bereich entsprechend zu berücksichtigen. Eine solche gemischte Verwendung optischer und elektrischer Signale kann auch durchaus sinnvoll sein, weil einerseits die Mittel zur Verarbeitung elektrischer Signale allgemein bekannt und sehr weit entwickelt sind, andererseits die optische Signalübertragung selbst innerhalb einer Leiterplatte der elektrischen Signalübertragung überlegen sein kann.

Ein auch für die vorliegende Erfindung passendes Raum- und Frequenzlagenumsetzermodul wurde schon in der DE 40 19 225.3 A1 (internes Aktenzeichen D. Böttle 15) beschrieben. Dieses, in der vorliegenden Erfindung in Figur 2 dargestellte Raum- und Frequenzlagenumsetzermodul SFnm weist zwei Eingänge I1 und I2, zwei Ausgänge 01 und 02, zwei Wellenlängen-Demultiplexer D1 und D2, zwei Wellenlängen-Multiplexer M1 und M2, zwei Konstantlicht-Quellen Q1 und Q2 und eine Koppelmatrix K mit Koppelelementen KE auf.

Das Modul SFnm enthält weiter noch eine Steuereinheit StE mit Steuerleitungen Stl zum Ansteuern der Koppelelemente KE sowie eine äußere Steuerleitung St zum Empfang der dafür erforderlichen Steuersignale.

An jedem Ein- und Ausgang können im Wellenlängenmultiplex zwei Signale übertragen werden. Es sind die beiden Betriebs-Wellenlängen λ1 und λ2 vorgesehen. In den den Eingängen I1 und I2 nachgeschalteten Demultiplexern D1 und D2 erfolgt je eine Aufspaltung nach den beiden Wellenlängen. Die insgesamt vier getrennt vorliegenden Signale werden den optischen Zeilenleitungen der Koppelmatrix K zugeführt.

Die beiden Konstantlichtquellen Q1 und Q2 arbeiten mit den beiden Betriebs-Wellenlängen λ1 bzw. λ2. Jede Konstantlichtquelle speist zwei Spaltenleitungen der Koppelmatrix K.

Die Zeilen- und Spaltenleitungen kreuzen sich in den Koppelelementen KE. Jedes Koppelelement KE ist so ausgebildet, daß es in einem nicht aktivierten Zustand das von der zugehörigen Konstantlichtquelle kommende Licht unbeeinflußt hindurchläßt und in einem aktivierten Zustand dieses Licht mit dem Signal der zugehörigen Zeilenleitung moduliert. Die Umschaltung zwischen aktiviertem und nicht aktiviertem Zustand erfolgt durch die genannten Mittel zum Ansteuern der Koppelelemente.

Von jeder Konstantlichtquelle Q1 und Q2 führt eine Spaltenleitung zu jedem Wellenlängen-Multiplexer M1 und M2. Die Wellenlängen-Multiplexer M1 und M2 sind den Ausgängen 01 bzw. 02 vorgeschaltet und fassen jeweils die hierfür bestimmten, auf Licht verschiedener Betriebswellenlängen aufmodulierten Signale zu einem gemeinsamen Wellenlängenmultiplex-Signal zusammen.

Von jedem Eingang I1 und I2 führt somit zu jedem Ausgang 01 und 02 ein Signalweg, der für jedes vom Eingang kommende Teilsignal durch Aktivierung eines Koppelelements KE schaltbar ist oder nicht. Durch Auswahl der Koppelelemente kann jedes an einem der Eingänge ankommende Teilsignal mit oder ohne Wellenlängenumsetzung zu jedem der Ausgänge hin vermittelt werden, wobei normalerweise darauf zu achten ist, daß zu jedem Ausgang pro Betriebswellenlänge nicht mehr als ein Teilsignal vermittelt werden darf, daß also pro Spaltenleitung gleichzeitig nicht mehr als ein Koppelelement aktiviert sein darf.

Der Fachmann erkennt ohne weiteres verschiedene Abwandlungsmöglichkeiten des anhand der Fig. 2 beschriebenen Schaltelements. Nur beispielhaft sind folgende Abwandlungen genannt:
Jeder weitere Eingang erfordert einen weiteren Demultiplexer, pro Betriebswellenlänge eine weitere Zeilenleitung und die zugehörigen weiteren Koppelelemente.

Jeder weitere Ausgang erfordert pro Betriebswellenlänge eine weitere Spaltenleitung, die zugehörigen weiteren Koppelelemente und einen weiteren Multiplexer.

Jede weitere Betriebswellenlänge erfordert pro Demultiplexer einen weiteren Ausgang und eine weitere Zeilenleitung, eine weitere Konstantlichtquelle und von dieser zu jedem Multiplexer eine weitere Spaltenleitung, die zugehörigen weiteren Koppelelemente und pro Multiplexer einen weiteren Eingang.

Auch der Empfang der Steuersignale, aus denen die Signale zum Ansteuern der Koppelelemente abgeleitet werden, kann wie bei herkömmlichen Vermittlungselementen bekannt, über die Eingänge I1 und I2 erfolgen. Dafür kann eine zusätzliche Wellenlänge verwendet werden; dies entspricht einem separaten Steuerkanal beim Zeitmultiplex. Die Steuersignale können aber auch Bestandteil der einzelnen Teilsignale sein, etwa derart, daß jeder zu vermittelnden Nachricht Steuersignale vorangehen.

Die Durchschaltung der Koppelelemente kann auch dynamisch erfolgen. Insbesondere ist daran gedacht, das Schaltelement für die Übermittlung von ATM-Signalen auszugestalten. Jedes Teilsignal besteht aus einer Folge von ATM-Zellen, die jeweils aus einem Zellkopf und einem nachfolgenden Informationsteil bestehen. Der Zellkopf enthält eine Information, aus der der weitere Weg der Zelle abgeleitet werden kann. Daraus kann, wie bei ATM üblich, eine Steuerinformation zur dynamischen Ansteuerung der Koppelelemente abgeleitet werden. Aufgrund dieser Steuerinformation wird dann für die Dauer einer ATM-Zelle ein bestimmter Signalweg geschaltet und bei Bedarf die Umsetzung der Wellenlänge veranlaßt.

Zur Realisierung der einzelnen Funktionen stehen dem Fachmann genügend Möglichkeiten zur Verfügung. Beispielhaft wird hier auf den Artikel "Optical Switching Device Technologies" von M. Sakaguchi und K. Kaede in IEEE Communications Magazine, May 1987 - Vol. 25, No. 5 verwiesen.

Als einfache Demultiplexer können Filter, als einfache Multiplexer können Koppler verwendet werden. Als Koppelelemente werden optisch ansteuerbare und elektrisch aktivierbare Elemente bevorzugt. Auch auf die o.g. Y-Laser wird hier verwiesen.

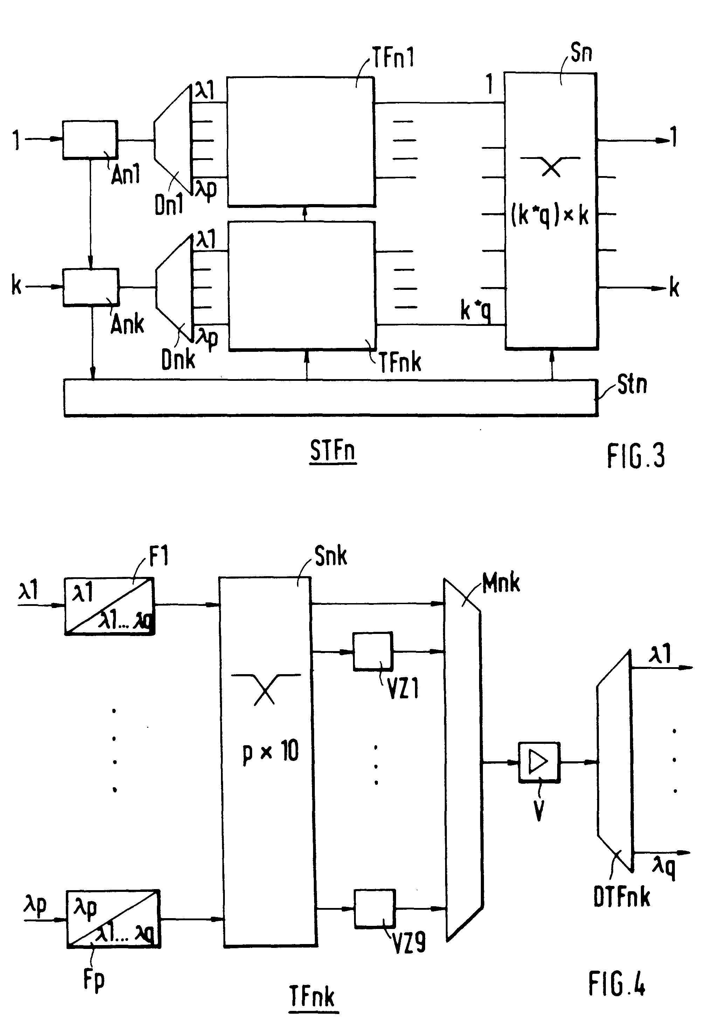

Das in Fig. 3 gezeigte Raum-, Zeit- und Frequenzlagenumsetzermodul STFn enthält Adressdekoder An1, ..., Ank, Wellenlängen-Demultiplexer Dn1, ..., Dnk, Untermodule TFn1, ..., TFnk mit Zeit- und Frequenzlagenumsetzung, eine Raumkoppeleinheit Sn und eine Steuereinheit Stn.

Das Modul STFn hat k optische Eingangsleitungen und k optische Ausgangsleitungen. Jeder Eingangsleitung ist ein Adressdekoder, ein Demultiplexer und ein Untermodul zugeordnet. Die Raumkoppeleinheit und die Steuereinheit ist allen Eingangsleitungen gemeinsam zugeordnet.

Jede Eingangsleitung führt p optische Signale, die sich durch ihre Betriebswellenlängen λ1, ..., λp unterscheiden. Die Adressdekoder trennen die auf der jeweiligen Eingangsleitung mit enthaltenen Adress- und Steuerinformationen ab und führen sie, vorzugsweise in elektrischer Form, der Steuereinheit zu. Die Adress- und Steuerinformationen können, wie oben am Beispiel der Raum- und Frequenzlagenumsetzermodule SFnm beschrieben, in einem zusätzlichen Übertragungskanal mit eigener Betriebswellenlänge enthalten sein; sie können Bestandteil der zu vermittelnden Signale sein, bei ATM im Zellkopf; sie können auch den zu vermittelnden Signalen durch einen besonderen Kode aufmoduliert sein. Alle diese Möglichkeiten sind an sich bekannt, die vorliegende Erfindung ist hiervon unabhängig. Auch ein an sich ebenfalls bekanntes separates Steuernetz (Steuerebene) ist hier verwendbar.

Die Demultiplexer Dn1, ..., Dnk trennen jeweils die einzelnen durch ihre Betriebswellenlängen unterschiedenen Signale voneinander und führen damit jeweils p getrennte Signale, insgesamt also p X k Signale, den k Untermodulen zu. Jedes Untermodul setzt diese Signale hinsichtlich Zeit- und Frequenzlage so um, wie dies auf der Ausgangsleitung der Vermittlungseinrichtung erforderlich oder möglich ist. Dabei erfolgt eine Reduktion, beispielsweise eine Halbierung, der Zahl der Betriebswellenlängen von p auf q. Die umgesetzten Signale werden, immer noch nach Betriebswellenlängen getrennt, der Raumkoppeleinheit Sn zugeführt.

Diese Raumkoppeleinheit Sn weist k X q Eingänge und k Ausgänge auf. Sie ist in üblicher Weise aus 2X2-Koppelelementen aufgebaut. Sie weist die Besonderheit auf, daß sie gleichzeitig Multiplexerfunktion für Signale mit verschiedenen Wellenlängen hat. Dies ist aber, abgesehen vom unsymmetrischen Aufbau, keine Besonderheit der Raumkoppeleinheit selbst, sondern eine Besonderheit ihrer Ansteuerung. Es können bis zu q Eingänge gleichzeitig auf einen Ausgang durchgeschaltet sein.

Das in Fig. 4 gezeigte Untermodul TFnk enthält p Frequenzlagenumsetzer F1, ..., Fp, eine Raumkoppeleinheit Snk, neun optische Verzögerungsglieder VZ1, ..., VZ9, einen Multiplexer Mnk, einen Verstärker V und einen Wellenlängen-Demultiplexer DTFnk.

Den Eingängen der Frequenzlagenumsetzer F1, ..., Fp, wird jeweils ein Signal mit einer bestimmten Betriebswellenlänge λ1, ..., λp zugeführt. Jeder Frequenzlagenumsetzer ist in der Lage, das ihm zugeführte Signal je nach Ansteuerung auf eine von q vorgegebenen Betriebswellenlängen λ1, ..., λq umzusetzen. Als Frequenzlagenumsetzer kommt eine Kombination aus optoelektrischem Umsetzer und abstimmbarem Laser oder der eingangs erwähnte Y-Laser in Frage. Die Abstimmung erfolgt jeweils von der Steuereinheit Stn aus.

Die Raumkoppeleinheit Snk hat p Eingänge und 10 Ausgänge. Sie wird von der Steuereinheit Stn angesteuert. Jeder Eingang ist mit dem Ausgang einer der Frequenzlagenumsetzer F1, ..., Fp verbunden. Neun Ausgänge der Raumkoppeleinheit sind mit je einem der optischen Verzögerungsglieder VZ1, ..., VZ9 verbunden. Die Verzögerungsglieder sind aufgerollte optische Leitungen mit einer Laufzeit, die jeweils einem ganzen Vielfachen, nämlich einmal bis neunmal, der Länge einer Zeitlage entspricht. Bei ATM ist die Länge einer ATM-Zelle gleich der Länge einer Zeitlage. Für Übertragungsgeschwindigkeiten von 2,4 Gbit/s ergeben sich Leitungslängen von 34,6 m und ganzen Vielfachen davon. Je nach Dimensionierung der Vermittlungseinrichtung und je nachdem, welche Verluste noch tolerierbar sind, können auch weniger Verzögerungsglieder ausreichen (bei geringem mittlerem Verkehr und hoher zulässiger Verlustrate z.B. 5) oder mehr Verzögerungsglieder notwendig sein (bei hohem mittlerem Verkehr und niedriger zulässiger Verlustrate z.B. 50).

Die Ausgänge der Verzögerungsglieder und der nicht mit einem Verzögerungsglied verbundene Ausgang der Raumkoppeleinheit Snk sind mit den Eingänge des Multiplexers Mnk verbunden. Die Raumkoppeleinheit Snk hat damit die Aufgabe, die Ausgänge der Frequenzlagenumsetzer mit demjenigen Verzögerungsglied zu verbinden, das die für das entsprechende Signal erforderliche Zeitlagenumsetzung bewerkstelligt. Auch in dieser Raumkoppeleinheit können wieder mehrere Eingänge mit demselben Ausgang verbunden sein.

Der Multiplexer Mnk kann ein einfacher Faserkoppler sein. Sein Ausgang ist über den Verstärker V mit dem Eingang des Wellenlängen-Demultiplexers DTFnk verbunden, der die Signale wieder hinsichtlich ihrer Betriebswellenlängen λ1, ..., λq trennt. Die Ausgänge führen, wie oben schon dargelegt, zu Eingängen der Raumkoppeleinheit Sn.

Die Steuerung der ganzen Vermittlungseinrichtung ist nicht Gegenstand der vorliegenden Erfindung. Die Aufgabe, zu jeder Zeit die gewünschte Verbindung zwischen einem Eingangskanal und einem Ausgangskanal herzustellen, unterscheidet sich nicht von der bei jeder herkömmlichen Vermittlungseinrichtung. Zur Lösung dieser Aufgabe ist es auch grundsätzlich unerheblich, ob zwischen untereinander gleichwertigen Frequenzlagen, Zeitlagen oder Raumlagen umgeschaltet wird. Die Vermittlungseinrichtung bedarf deshalb keiner erfindungsspezifisch ausgestalteten Steuerung.

## Patentansprüche

1. Mehrstufige Vermittlungseinrichtung für optische Signale mit Raumlagen-, Zeitlagen- und Frequenzlagenumsetzern, **dadurch gekennzeichnet, daß** die Zeitlagenumsetzer nur in der letzten Stufe enthalten sind und daß die vorangegangenen Stufen derart dimensioniert sind, daß die in diesen Stufen fehlende Möglichkeit der Zeitlagenumsetzung dort durch eine Erhöhung der zur Verfügung stehenden Frequenzlagen oder Raumlagen ausgeglichen wird.

2. Mehrstufige Vermittlungseinrichtung nach Anspruch 1, **dadurch gekennzeichnet, daß** die letzte Stufe Raumlagen-, Zeitlagen- und Frequenzlagenumsetzer enthält und die übrigen Stufen jeweils Raumlagen- und Frequenzlagenumsetzer enthalten.

3. Mehrstufige Vermittlungseinrichtung nach Anspruch 1, **dadurch gekennzeichnet, daß** die ausgleichende Dimensionierung dadurch erreicht wird, daß zwischen den Stufen soviele Frequenzlagen und soviele Raumlagen vorgesehen werden, daß dort das Produkt aus der Zahl der Frequenzlagen und der Zahl der Raumlagen etwa doppelt so groß ist wie das entsprechende Produkt vor der ersten und nach der letzten Stufe.

## Claims

1. Multistage switching facility for optical signals, with space slot, time slot and frequency slot converters, **characterised in that** the time slot converters are contained only in the last stage and that the preceding stages are designed so that the lack of time slot conversion in these stages is balanced by an increase in the available frequency slots or space slots.

2. Multistage switching facility according to Claim 1, **characterised in that** the last stage contains space slot, time slot and frequency slot converters, and that each of the other stages contains space slot and frequency slot converters.

3. Multistage switching facility according to Claim 1, **characterised in that** the equalising dimensioning is achieved by providing so many frequency slots and so many space slots between the stages that the product of the number of frequency slots and the number of space slots is approximately double the corresponding product prior to the first stage and after the last stage.

## Revendications

1. Commutateur à plusieurs étages pour signaux optiques avec convertisseurs à répartition temporelle, fréquentielle et spatiale, **caractérisé en ce que** les convertisseurs à répartition temporelle ne sont contenus que dans l'étage final et que les étages précédents sont dimensionnés de telle sorte que la possibilité de conversion temporelle manquante dans ces étages soit compensée à cet endroit par une élévation des intervalles de fréquence ou d'espace disponibles.

2. Commutateur à plusieurs étages selon la revendication 1, **caractérisé en ce que** le dernier étage comporte des convertisseurs à répartition spatiale, temporelle et fréquentielle et que les autres étages contiennent chacun des convertisseurs à répartition spatiale et fréquentielle.

3. Commutateur à plusieurs étages selon la revendication 1, **caractérisé en ce que** le dimensionnement compensateur est atteint par le fait qu'il est prévu entre les étages autant d'intervalles de fréquence et autant d'intervalles d'espace que le produit du nombre des intervalles de fréquence par le nombre d'intervalles d'espace représente environ deux fois plus grand que le produit correspondant avant le premier et après le dernier étage.
